(19) Europäisches Patentamt
European Patent Office
Office européen des brevets

(11) **EP 1 648 110 B1**

(12) **EUROPEAN PATENT SPECIFICATION**

(45) Date of publication and mention
of the grant of the patent:
**19.03.2008 Bulletin 2008/12**

(51) Int Cl.:
*H04L 9/08* *(2006.01)*     *G06F 21/00* *(2006.01)*

(21) Application number: **05256342.6**

(22) Date of filing: **12.10.2005**

(54) **Method and apparatus for sharing and generating system key in DRM system**

Verfahren und Vorrichtung zur Erzeugung und gemeinsamen Nutzung eines Systemschlüssels in einem DRM-System

Procédé et dispositif de génération et de partage d'une clé de système dans un système de gestion de droits

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.10.2004 KR 2004082569**

(43) Date of publication of application:
**19.04.2006 Bulletin 2006/16**

(73) Proprietor: **Samsung Electronics Co., Ltd.**
**Suwon-si, Gyeonggi-Do (KR)**

(72) Inventor: **Lee, Jae-heung**
**Suwon-si, Gyeonggi-do (KR)**

(74) Representative: **Robinson, Ian Michael et al**
**Appleyard Lees**
**15 Clare Road**
**Halifax HX1 2HY (GB)**

(56) References cited:
**WO-A-98/42098**

• **MENEZES A J ET AL: "Handbook of applied cryptography, PASSAGE" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 405-410,526, XP002244107 ISBN: 0-8493-8523-7**

**Description**

Methods and apparatus consistent with the present invention relate to generating a system key, and more particularly, to generating a system key which is not affected by upgrade of system information over a digital rights management system.

Digital rights management (DRM) is a technique for managing contents such that the contents can be used only in an authorized condition. The authorized condition includes a specified user, a reproduction time period, a reproduction number, and a reproduction location.

There are two kinds of methods of establishing the authorized condition allowing only authorized users to use the contents.

According to a first method, a user's identifier and a password are used to establish the authorized condition. Unfortunately, this method cannot prevent an authorized user from sharing a password and the duplicate contents with unauthorized users.

According to a second method, unique system information is used to allow particular devices to reproduce the contents. The system information includes device identification information, such as a serial number of a Central Processor Unit (CPU), a Media Access Control (MAC) address of a network card, a volume label of a hard disk, a memory size, a basic input/output system (BIOS) version, an operating system (OS) type, an OS version, an OS manufacture's identifier, and a serial number of a sound card. Therefore, this method is relatively useful because it is possible to prevent an authorized user from conspiring with dishonest users due to the unique system information.

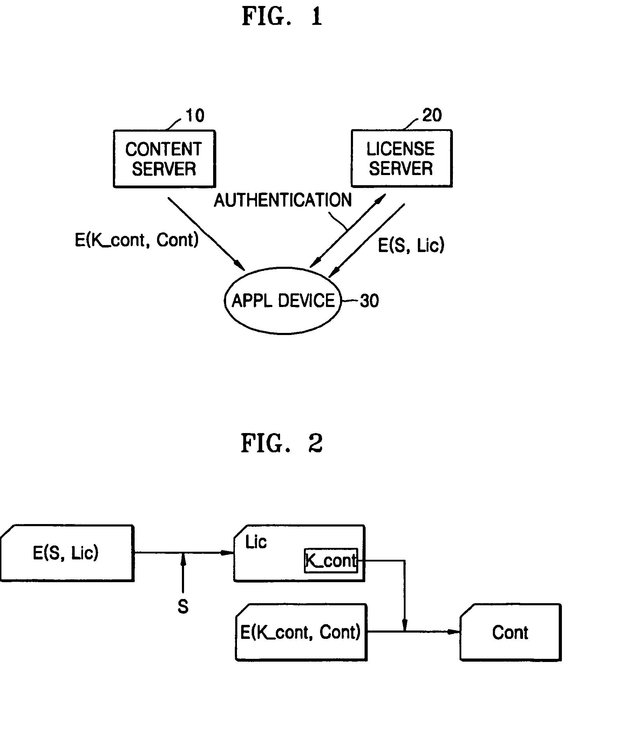

Figure 1 is a schematic block diagram illustrating a DRM system.

The DRM system includes a content server 10, a license server 20, and an application device 30. The application device 30 includes various media player devices capable of reproducing the contents, such as a digital video disk (DVD) player, a game machine, a mobile phone, and a personal data assistant (PDA).

The content server 10 provides the application device 30 with encrypted contents E(K_cont, Cont), where the content Cont is encrypted with a content key K_cont.

The license server 20 performs an authentication process for the application device 30. If the content authority is validated, the license server 20 transmits an encrypted license E(S, Lic) to the application device 30. The encrypted license E(S, Lic) is generated by encrypting the license Lic with the system key S, where the license Lic is a computer readable file containing information on an authorized condition and the content key K_cont used to decrypt the content Cont. In addition, the system key S can be generated in each application device 30 by using the system information on each component in the system according to a predetermined rule.

Figure 2 illustrates a process of reproducing the content in an application device.

First, the application device 30 receives the encrypted contents E(K_cont) and the encrypted license E(S, Lic) from the content server 10. Then, the encrypted license E(S, Lic) is decrypted by using the system key S to generate the license Lic. Subsequently, the application device 30 extracts the content key K_cont from the license Lic, and decrypts the encrypted content E(K_cont, Cont) by using the extracted content key K_cont to generate and reproduce the content Cont.

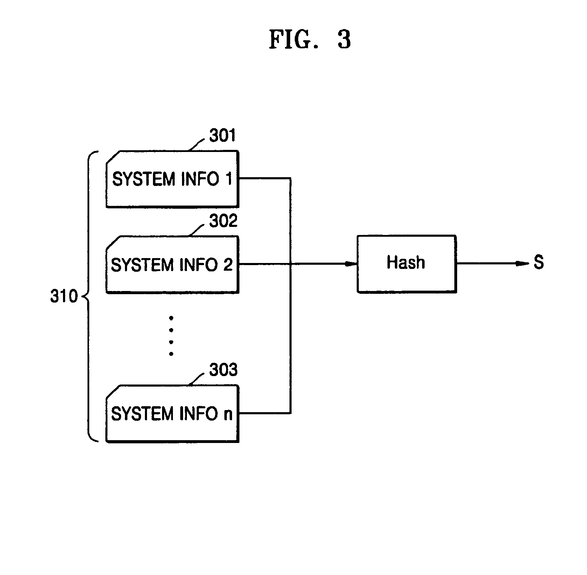

Figure 3 illustrates a process for generating a system key S in an application device shown in Figure 2.

The system key S is generated by using one or more system information values 301, 302, ..... For example, in an iTune (a registered trademark of Apple Computer, Inc.) system manufactured by an Apple Computer, Inc., the application device 30 concatenates a serial number of a C drive, a BIOS version, a CPU name, a manufacturer's identifier of a Windows system, and additional information, and applies an MD5 hash function to generate a system key.

The system key S is generated by the application device 30 after an authentication process with a license server 20, shared with a license server 20, and deleted from the application device 30 to avoid a hacking. The application device 30 stores only the system information necessary to generate the system key S but does not store the system key S. Therefore, an unauthorized application device cannot generate the system key that has been used to encrypt the license in the license server 20 because it is impossible to know what information on the components should be used and what kind of function should be applied to such information. In this manner, DRM can be accomplished.

However, the key generation method shown in Figure 3 has a problem in that it is impossible to reproduce the content that has been previously stored if anything of the system information in the application device 30 is modified. This is because the application device 30 cannot generate the original system key, the system key shared with the license server 20, if anything of the system information 310 has been modified.

Particularly, typical system information such as a serial number of a CPU, a BIOS version, a CPU name, and a manufacturer's identifier of a Windows operating system can be frequently changed by the hardware or software upgrade of the application device 30. This makes the aforementioned problem more serious.

WO-A-98/42098 discloses a digital product rights management technique. A digital product is freely distributed through uncontrolled channels in encrypted form. Security fragments of the encrypted product are withheld, and provided only upon communication with a license server. The customer uses reader software to purchase a license. Such software examines components then present on the reader system to develop a reader system signature, which the license server uses to encrypt the product decryption key and the security fragments before sending them to the reader system. When the customer wishes to use the product, a new reader system signature is generated and used to decrypt the product fragments. When the system information has been modified and the system key generated by the application device is not the same as the originally generated system key, a revalidation package is sent to a license server which performs a check to determine whether the system key in the revalidation package is based on a component of the application device. If the difference between the two system keys is within a predetermined threshold then the new system key becomes the basis for re-encryption of security fragments and a new product server download package is sent to the application device. The precharacterising portions of the appended claims are based on this document.

According to the present invention there is provided an apparatus and method as set forth in the appended claims. Preferred features of the invention will be apparent from the dependent claims, and the description which follows.

The present invention provides a method of generating a system key by using part of the system information remained in their original states even when part of the system information in the application device are changed.

According to an aspect of the present invention, there is provided a method of sharing a system key on an application device and a license server over a digital rights management system, comprising: defining a (k-1)th order polynomial having k random numbers as coefficients, where k denotes a natural number; generating n polynomial solutions by inputting n constants into the polynomial, where n denotes a natural number; generating characteristic information values by performing an XOR operation on the polynomial solutions and n system information values, the system information values representing identification information on components of the application device; and selecting one of the coefficients of the polynomial as a system key and transmitting the system key to the license server, wherein the characteristic information values are used to generate the same system key when part of the system information values are changed.

The system information value may include at least one selected from a group consisting of a serial number of a CPU, a MAC address of a network card, a volume label of a hard disk, a memory size, a BIOS version, an OS type, an OS version, an OS manufacture's identifier, and a serial number of a sound card, or a combination of them.

The n system information values may be hashed to equalize a bit size of the system information value with a bit size of the polynomial solution.

According to another aspect of the present invention, there is provided a method of generating a previously shared system key in an application device over a DRM system, comprising: generating n modified polynomial solutions by performing an XOR operation on n modified system information values and n characteristic information values, where n denotes a natural number; and generating the system key by using k modified polynomial solutions selected from the n modified polynomial solutions, where k denotes a natural number smaller than n, wherein the modified system information values are generated by modifying at least a portion of n system information values representing identification information on components of the application device, the characteristic information values are generated by performing an XOR operation on polynomial solutions obtained by inputting arbitrary constants into a (k-1)th order polynomial and the n system information values, and the system key is arbitrarily selected from the coefficients of the polynomial.

The generation of the system key may include: selecting the k modified polynomial solutions corresponding to the k arbitrary constants from the n modified polynomial solutions; generating a candidate system key by inputting the coordinate values, {the arbitrary constants, k selected polynomial solutions corresponding to the arbitrary constants}; and verifying the candidate system key by decrypting an encrypted license received from a license server by using the candidate system key.

The generation of the system key may further include determining the candidate system key as an authentic system key if the decryption is successful, or selecting other k modified polynomial solutions different from those selected previously if the decryption is not successful and repeating the generation of the candidate system key and the verification of the candidate system key.

According to still another aspect of the present invention, there is provided an apparatus for sharing a system key with a license server over a DRM system, comprising a system information database storing, retrieving, and editing n system information values corresponding to identification information on components of an application device; a polynomial generation unit generating a (k-1)th order polynomial by arbitrarily selecting coefficients of the polynomial, determining one of the selected coefficients of the polynomial as a system key, and transmitting it to the license server; a polynomial solution calculation unit generating n polynomial solutions by inputting n arbitrary constants into the polynomial; and an XOR unit generating characteristic information values by performing an XOR on the polynomial solutions and the system information values, wherein the characteristic information values are stored in a predetermined area in the application device and used to generate the same system key when part of the system information values are changed.

According to still another aspect of the present invention, there is provided an apparatus for generating a previously shared system key over a DRM system, comprising: a system information database storing n system information values corresponding to identification information on components of an application device, where n denotes a natural number; a characteristic information database storing characteristic information values generated by performing an XOR operation on the n system information values and polynomial solutions obtained by inputting arbitrary constants into a (k-1)th order polynomial, where k denotes a natural number smaller than n; an XOR unit generating n modified polynomial solutions by performing an XOR operation on the n characteristic information values and n modified system information values obtained by modifying at least a portion of the n system information values; and a system key generation unit generating the system key by using k modified polynomial solutions selected from the n modified polynomial solutions, wherein the system key is arbitrarily selected from coefficients of the polynomial.

The system key generation unit may comprise: a selection unit selecting k modified polynomial solutions corresponding to the k arbitrary constants from the n modified polynomial solutions; a key generation unit generating a candidate system key by inputting coordinate values into the polynomial, the coordinate values consisting of {the arbitrary constants, the k selected polynomial solutions corresponding to the arbitrary constants}; and a key verification unit verifying the candidate system key by decrypting an encrypted license received from a license server by using the candidate system key.

The above and other aspects of the present invention will become more apparent by describing in detail exemplary embodiments thereof with reference to the attached drawings in which:

Figure 1 is a schematic block diagram illustrating a DRM system;

Figure 2 illustrates a process of reproducing contents in an application device;

Figure 3 illustrates a process of generating a system key S in the application device shown in Figure 2.

Figure 4 is a flowchart illustrating a method of determining a system key in an application device and sharing the system key with a license server;

Figure 5 is a flowchart illustrating a method of generating a system key according to an exemplary embodiment of the present invention;

Figure 6 is a schematic block diagram illustrating a system key sharing apparatus according to an exemplary embodiment of the present invention;

Figure 7 is a schematic block diagram illustrating a system key generation unit according to an exemplary embodiment of the present invention; and

Figure 8 illustrates a mathematical relation of various values used in an exemplary embodiment of the present invention.

Hereinafter, exemplary embodiments according to the present invention will be described in detail with reference to the accompanying drawings.

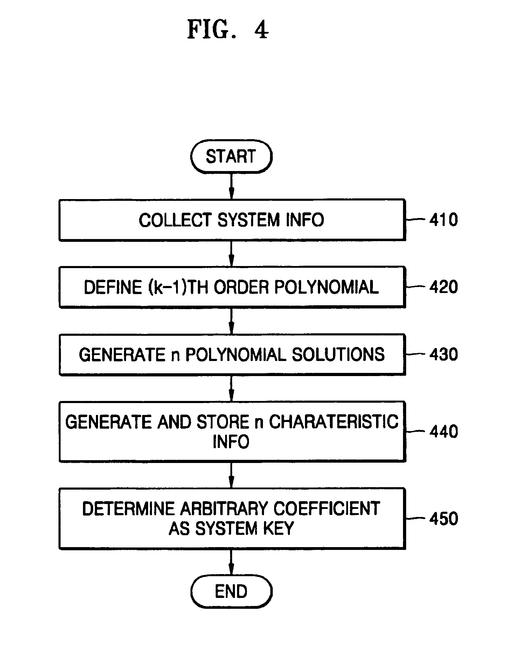

Figure 4 is a flowchart illustrating a method of determining a system key in an application device and sharing the system key with a license server.

As described above, the application device generates a system key S, and shares it with the license server. For discrimination, a shared system key S refers to a system key shared with the license server generated after an authentication process in the application device as well as the license server, and a device system key S_dev refers to a system key generated in the application device 30 whenever the content is reproduced later. The application device 30 can generate the device system key S_dev identical to the shared system key S if an authorized application device 30 is used. Figure 4 shows how to determine the shared system key S used to transmit the content later and share the shared system key S with the license server 20.

In operation 410, the application device 30 collects n system information values g1, g2, ...., gn (where n denotes a natural number). The system information values g1, g2, ..., gn can be stored in a predetermined storage area in the application device 30.

In operation 420, the application device 30 defines a (k-1)th order polynomial having k random numbers S, $a_1$, $a_2$, ..., $a_{k-1}$ as its coefficients, as shown in the following Equation 1.

[Equation 1]

$$f(x) = S + a_1 x + a_2 x^2 + \ldots + a_{k-1} x^{k-1}$$

In operation 430, the application device 30 generates n polynomial solutions by inputting n arbitrary constants into the polynomial f(x). For example, the application device 30 generates n polynomial solutions f(1)=f1, f(2)=f2, ..., f(n)=fn by inputting 1, 2, ...., n into the polynomial f(x).

In operation 440, the application device 30 generates characteristic information values h1, h2, ..., hn by performing an XOR operation on the polynomial solutions f1, f2, ..., fn and the system information values g1, g2, ..., gn, respectively, and then stores the characteristic information values h1, h2, ..., hn in a predetermined storage area in the application device 30. The characteristic information values are used to generate the system key later.

In operation 450, the application device 30 determines one of the coefficients of the polynomial f(x) determined in operation 420 as a system key and then transmits the system key to the license server 20. For example, the application device 30 may determine the coefficient S as the system key and then transmit it to the license server 20.

The system key S is generated by the application device 30 after an authentication process with the license server 20, shared with the license server 20, and then removed from the application device 30 to avoid a hacking. The application device 30 stores only the system information value necessary to generate the system key S but does not store the system key S. The application device 30 generates the system key S whenever the content is reproduced.

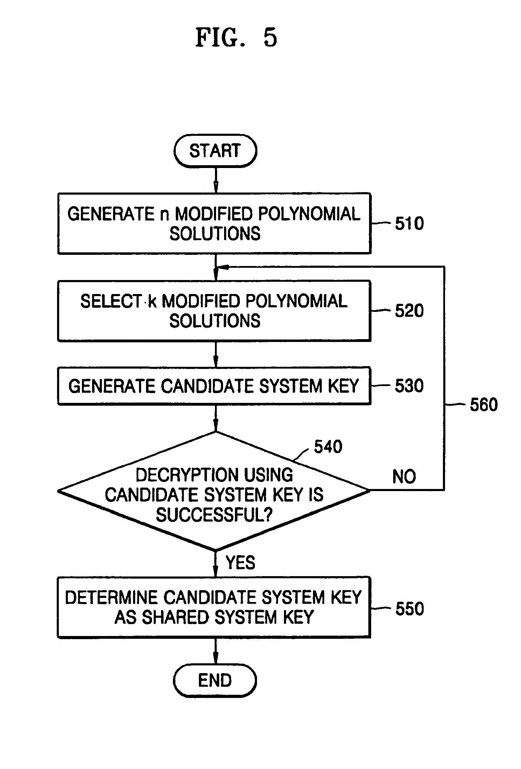

Figure 5 is a flowchart illustrating a method of generating a system key according to an exemplary embodiment of the present invention.

In operation 510, the application device 30 performs an XOR operation on the modified system information values g1', g2', ..., gi', ..., gn' and the characteristic information values h1, h2, ..., hi, ..., hn to generate modified polynomial solutions f1', f2', ..., fi', ..., fn'. The modified system information values g1', g2', ..., gi', ..., gn' are generated by modifying part of the system information values g1, g2, ..., gi, ... gn by way of the upgrade of components in the application device 30.

Herein, the subscript i (i.e., 1, 2, ..., n) denotes an arbitrary constant. In addition, if a system information value, a polynomial solution, and a characteristic information value have an identical subscript, it means that they are related with one another. For example, if an arbitrary constant of a subscript i=7 is 130, we could obtain relations, f7=f(130) and g7 XOR f7 = h7.

Meanwhile, according to characteristics of an XOR operation, if g XOR f = h, then g XOR h = f. In addition, part of the modified system information values g1', g2', ..., gi', ..., gn' are identical to the system information values g1, g2, ..., gn. Therefore, some of the modified polynomial solutions f1', f2', ..., fn' are identical to the polynomial solutions f1, f2, ..., fn, and the remaining modified polynomial solutions are different from the remaining polynomial solutions because they are affected by the changes of the system information values. For example, if only two system information values g1' and g2' are modified among the system information values g1, g2, ..., and g7, the modified system information values become g1', g2', g3, g4, g5, g6, and g7, and thus the modified polynomial solutions are f1' = g1' XOR h1, f2' = g2' XOR h2, f3' = g3' XOR h3 = g3 XOR h3 = f3, f4' = g4' XOR h4 = g4 XOR h4 = f4, f5' = g5' XOR h5 = g5 XOR h5 = f5, f6' = g6' XOR h6 = g6 XOR h6 = f6, and f7' = g7' XOR h7 = g7 XOR h7 = f7. In other words, only the modified polynomial solutions f1' and f2' are different from the original polynomial solutions f1 and f2, but the remaining polynomial solutions f3' through f7' are identical to the original ones.

In the above example, the number of the polynomial solutions which remain in their original states is 5. If the number of the polynomial solutions which remain in their original states is larger than or equal to the degree (k-1) of the polynomial f(x) plus 1, that is, (k-1)+1 = k, the coefficient S of the polynomial f(x) can be obtained by inputting the coordinate values of the polynomial solutions which remain in their original states into the polynomial f(x). In the above example, the coordinate values of the polynomial solutions remained in their original states are (3, f3), (4, f4), (5, f5), (6, f6), and (7, f7). Therefore, it is possible to produce the shared system key S. The following operations 520 through 540 describe these processes.

In operation 520, the application device 30 arbitrarily selects k modified polynomial solutions f1', f2', ..., fn' generated in operation 510.

In operation 530, the application device 30 generates a candidate system key S_can by inputting the coordinate values of the modified polynomial solutions, that have been selected, into the polynomial f(x). Herein, the coordinate value means (an arbitrary constant, a modified polynomial solution corresponding to the arbitrary constant).

In operation 540, the application device 30 examines whether the candidate system key S_can generated in operation 530 corresponds with the shared system key S by decrypting the encrypted license E(S, Lic) received from the license server 20 by using the candidate system key S_can generated in operation 530.

In operation 550, if the decryption is successful, that is, the license Lic can be extracted from the encrypted license E(S, Lic) by the decryption, then the candidate system S_can is determined to be the shared system key S and the process is terminated.

In operation 560, if the decryption is not successful, operations 520 through 540 are repeated. In other words, other k modified polynomial solutions different from those selected in operation 520 are selected, another candidate system key is generated, and then the candidate system key is examined.

In the exemplary embodiments illustrated in Figures 4 and 5, if the bit sizes of each system information value are different, the bit sizes in each system information value are equalized by using a Hash function just before the XOR operation. More specifically, in operation 440, the system information values g1, g2, ..., gn are hashed and then XORed with the polynomial solutions f1, f2, ..., fn. Similarly, in operation 510, the modified system information values g1', g2', ..., gn' are hashed and then XORed with the characteristic information values h1, h2, ..., hn.

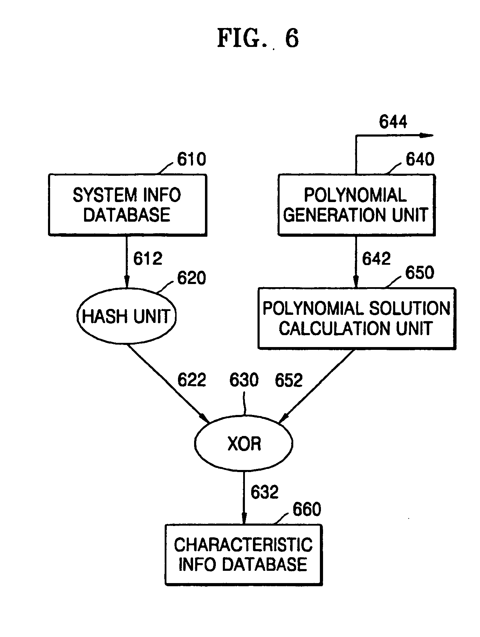

Figure 6 is a schematic block diagram illustrating a system key sharing apparatus according to an exemplary embodiment of the present invention.

The system key sharing apparatus according to an exemplary embodiment of the present invention includes a system information database 610, a Hash unit 620, an XOR unit 630, a polynomial generation unit 640, a polynomial solution calculation unit 650, and a characteristic information database 660.

The system information database 610 contains n system information values 612. The system information values 612 include information on various system components, such as a serial number of a CPU, a MAC address of a network card, a volume label of a hard disk, a memory size, a BIOS version, an OS type, an OS version, an OS manufacturer's identifier, and a serial number of a sound card.

The hash unit 620 extracts the system information values 612 from the system information database 610, and then hashes them to generate hashed system information values 622. This is because such a hash function allows the bit sizes of the system information values to be equalized. Alternatively, this hash unit 620 can be omitted if the bit sizes of the system information values are equal. Herein, the hashed system information values 622 having equalized bit sizes are represented as g1, g2, ..., gn.

The polynomial generation unit 640 arbitrarily selects the degree k-1 and the coefficients $a_1$, $a_2$, ..., $a_{k-1}$ to generate a polynomial f(x), 642 as shown in Equation 1 and then transmits the coefficient S, 644 of the polynomial f(x) to the license server 20. The license server 20 determines the polynomial coefficient S as a system key, and then encrypts the license Lic by using the system key S, 644.

The polynomial coefficients $a_1$, $a_2$,...., $a_{k-1}$ can be selected by a random number generation. The selection of the polynomial degree k-1 is related with the number n of the system information values 162. The larger number of the modified system information values and the smaller number of the original system information values 612 which remain in their original states will result in a larger k.

The polynomial solution calculation unit 650 generates n polynomial solutions f(1)-f1, f(2)=f2, ..., f(n)=fn corresponding to the arbitrary constants by inputting, for example, 1, 2, ..., n into the polynomial f(x).

The XOR unit 630 performs an XOR operation on n polynomial solutions 652 and n hashed system information values 622 to generate characteristic information values 632 and stores the generated characteristic information values 632 in a predetermined storage area in the application device, for example, a characteristic information database 660. The polynomial solutions f1, f2, ..., fn, the hashed system information values g1, g2, ..., gn, and the characteristic information values h1, h2, ..., hn are related with one another as follows in Equation 2.

[Equation 2]

$$f_1 XOR g_1 = h_1$$
$$f_2 XOR g_2 = h_2$$
$$\vdots$$
$$f_n XOR g_n = h_n$$

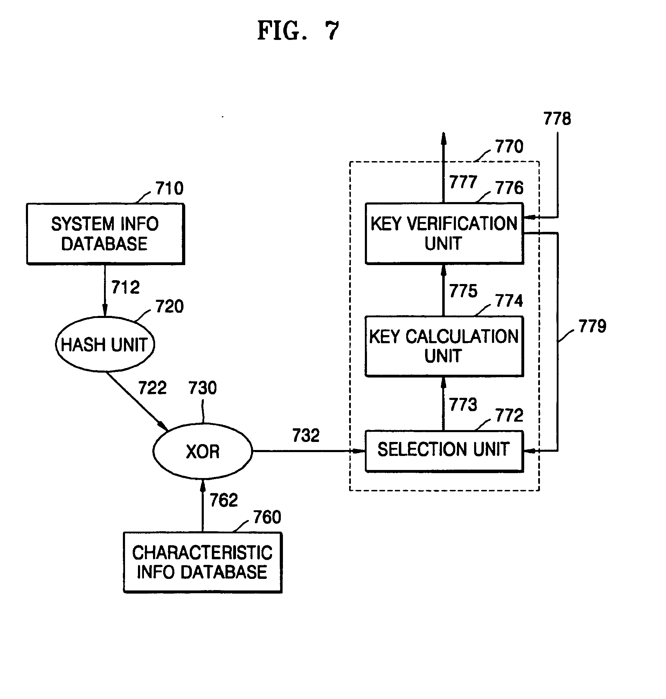

Figure 7 is a schematic block diagram illustrating a system key generation unit according to an exemplary embodiment of the present invention.

The system key generation unit includes a system information database 710, a hash unit 720, an XOR unit 730, a characteristic information database 760, and a system key generation unit 770.

The system information database 710 stores, edits, retrieves, and edits n system information values 712. When the application device 30 has been upgraded, some system information values may be changed from those shown in Figure 6. Similarly, some hashed system information values 722 may be changed from those shown in Figure 6. Alternatively, like the case shown in Figure 6, if the bit sizes of all the system information values 712 are equal, the hash unit 720 can be omitted. Thus, the hashed system information 722 shown in Figure 7 can be represented as modified system information values g1', g2', ..., gn'.

The characteristic information database 760 stores, retrieves, and edits the characteristic information values 762. As described with reference to Figure 6, the characteristic information values 762 are values obtained by performing an XOR operation using the n polynomial solutions 652, which are generated by substituting arbitrary constants into the polynomial f(x) used to generate the system key, and the n hashed system information values 622.

The XOR unit 730 generates modified polynomial solutions 732 by performing an XOR operation on the modified system information values 722 and the characteristic information values 762. The characteristic information values 762 are extracted from the characteristic information database 760. The characteristic information values have been generated according to the process shown in Figure 6 when the application device 30 selects a system key S, and then stored in the characteristic information database 760.

The system key generation unit 770 generates a system key 777 by using the modified polynomial solutions 732.

The modified system information values 722, the characteristic information values 762, and the modified polynomial solutions 732 are related with one another as follows in Equation 3.

$$[\text{Equation 3}]$$

$$g_1'\,XOR\,h_1 = f_1'$$
$$g_2'\,XOR\,h_2 = f_2'$$
$$\cdot$$
$$\cdot$$
$$g_1'\,XOR\,h_1 = f_1'$$
$$\cdot$$
$$\cdot$$
$$g_n'\,XOR\,h_n = f_n'$$

In the above Equation 3, some modified system information values g1', g2', ..., gn' are not changed and thus equal to their original values g1, g2, ..., gn. In addition, if the modified system information values remain in their original states (i.e., g=g'), it is recognized that f' = g' XOR h = g XOR h = h XOR g = (f XOR g) XOR g = f XOR (g XOR g) = f XOR 0 = f. In other words, if g=g', then the modified polynomial solution f' satisfies the polynomial f(x), and finally the system key S can be generated by inputting k coordinate values (i.e., (I, fi')) into the polynomial f(x). The system key generation unit 770 performs these processes.

The system key generation unit 770 includes a selection unit 772, a key calculation unit 774, and a key verification unit 776.

The selection unit 772 selects k modified polynomial solutions 773 from n modified polynomial solutions 732 transmitted from the XOR unit 730.

The key calculation unit 774 generates candidate system keys 775 by inputting the selected polynomial solutions 773 into the polynomial f(x).

The key verification unit 776 verifies the candidate system key based on the decryption results, that is, whether or not the encrypted license received from the license server can be decrypted by using the candidate system key.

If the decryption of the encrypted license is successful, the corresponding candidate system key 775 is determined to be an authentic system key 777 and then output.

If the decryption of the encrypted license is not successful, an update signal 779 is transmitted to the selection unit 772 to instruct the selection unit 772 to select another k modified polynomial solutions 732. As a result, the system key generation unit 770 can output an authentic system key 777 through generation and verification of the candidate system key.

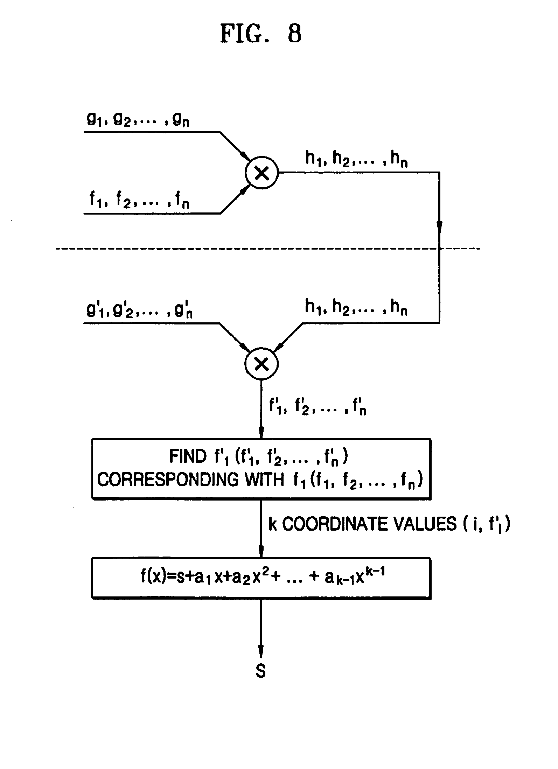

Figure 8 illustrates a mathematical relation of various values used in an exemplary embodiment of the present invention.

Above the dashed line shown in Figure 8, it is illustrated that the characteristic information values are generated and stored before the system information values are modified and then the system key is determined.

The characteristic information values h1, h2, ..., hn are generated by performing an XOR operation on the system information values g1, g2, ..., gn and the polynomial solutions f1, f2, ..., fn. The polynomial solutions f1, f2, ..., fn are generated by inputting 1, 2, ..., n into the polynomial f(x), and the polynomial f(X) is a (k-1)th order polynomial $f(x) = S + a_1 x + a_2 x^2 + ... + a_{k-1} x^{k-1}$. The coefficient S is determined to be a system key and transmitted to the license server 20. The characteristic information values h1, h2, ..., hn are transmitted to the application device 30.

Under the dashed line, it is illustrated that the application device generates the system key after the system information values are modified.

The modified polynomial solutions f1', f2', ...fn' are generated by performing an XOR operation on the characteristic information values h1, h2, ..., hn and the modified system information values g1', g2', ..., gn'. If gi=gi', then the coordinate values (i, fi') consisting of the modified polynomial solutions satisfies the polynomial f(x) due to the characteristics of an XOR operation and the definition of the characteristic information values.

Therefore, if the number of the modified polynomial solutions (i, fi') satisfying gi=gi' exceeds k, the application device 30 can generate the system key S by inputting the coordinate values (i, fi') consisting of the modified polynomial solutions into the polynomial f(x).

A method of and an apparatus for generating a system key according to the invention can also be embodied as computer readable codes on a computer readable recording medium. Also, functional programs, codes, and code segments for accomplishing the present invention can be easily construed by programmers skilled in the art to which the present invention pertains. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves such as data transmission through the Internet.

Although a few preferred embodiments have been shown and described, it will be appreciated by those skilled in the art that various changes and modifications might be made without departing from the scope of the invention, as defined in the appended claims.

**Claims**

1. A method of sharing a system key between an application device (30) and a license server (20) of a digital rights management system, the method **characterised by**:

   defining a (k-1)th order polynomial having k random numbers as coefficients, where k denotes a natural number;
   generating n polynomial solutions ($f_1...f_n$) by inputting n constants into the (k-1)th order polynomial, where n denotes a natural number;
   generating n characteristic information values ($h_1...h_n$) by performing an XOR operation on the n polynomial solutions and n system information values ($g_1...g_n$), the n system information values representing identification information on components of the application device (30); and
   selecting one of the coefficients of the (k-1)th order polynomial as a system key (S) and transmitting the system key to the license server (20), wherein the characteristic information values are used to generate the same system key when a portion of the n system information values are changed.

2. The method according to claim 1, further comprising deleting the coefficients from the application device (30).

3. The method according to claim 1 or 2, wherein the n system information values include at least one of a serial number of a central processing unit, a media access control address of a network card, a volume label of a hard disk, a memory size, a basic input/output system version, an operating system type, an OS version, an OS manufacture's identifier, and a serial number of a sound card.

4. The method according to any preceding claim, wherein the n system information values are equalized by using a hash function before performing the XOR operation.

5. A method of generating a previously shared system key for an application device (30) of a digital rights management system, the method **characterised by**:

generating n modified polynomial solutions ($f'_1....f'_n$) by performing an XOR operation on n modified system information values ($g'_1...g'_n$) and n characteristic information values ($h_1...h_n$), where n denotes a natural number; and

generating the system key (S) by using k modified polynomial solutions selected from the n modified polynomial solutions, where k denotes a natural number smaller than n, wherein the modified system information values ($g'_1...g'_n$) are generated by modifying at least a portion of n system information values representing identification information on components of the application device (30),

the characteristic information values ($h_1...h_n$) are generated by performing an XOR operation on polynomial solutions ($f_1...f_n$) obtained by inputting arbitrary constants into a (k-1)th order polynomial and the n system information values, and

the system key is arbitrarily selected from coefficients of the (k-1)th order polynomial.

6.  The method according to claim 5, wherein the generating of the system key includes determining the system key by inputting coordinate value, consisting of the arbitrary constants, and the modified polynomial solutions corresponding to the arbitrary constants into the (k-1)th order polynomial.

7.  The method according to claim 5 or 6, wherein the generating of the system key includes:

selecting the k modified polynomial solutions corresponding to the k arbitrary constants from the n modified polynomial solutions;

generating a candidate system key by inputting the coordinate values, consisting of the arbitrary constants and the k polynomial solutions corresponding to the arbitrary constants; and

verifying the candidate system key by decrypting an encrypted license received from a license server (20) by using the candidate system key.

8.  The method according to claim 7, wherein the generating of the system key further includes determining the candidate system key as an authentic system key if the decrypting of the encrypted license is successful.

9.  The method according to claim 7, wherein the generating of the system key further includes selecting other k modified polynomial solutions different from those selected previously if the decrypting of the encrypted license is not successful and repeating the generating of the candidate system key and the verification of the candidate system key.

10. The method according to any of claims 5 to 9, wherein the modified system information values include at least one of a serial number of a central processing unit, a media access control address of a network card, a volume label of a hard disk, a memory size, a basic input/output system version, an operating type, an OS version, an OS manufacture's identifier, and a serial number of a sound card.

11. The method according to any of claims 5 to 10, wherein the n modified system information values are equalized by using a hash function before performing the XOR operation.

12. An apparatus for sharing a system key with a license server (20) of a digital rights management system, the apparatus **characterised by**:

a system information database (610) which stores, retrieves, and edits n system information values ($g_1...g_n$) corresponding to identification information on components corresponding to identification information on components of an application device (30);

a polynomial generation unit (640) which generates a (k-1)th order polynomial by arbitrarily selecting coefficients of the (k-1)th order polynomial, determines one of the selected coefficients of the polynomial as a system key, and transmits the system key to the license server (20);

a polynomial solution calculation unit (650) which generates n polynomial solutions ($f_1...f_n$) by inputting n arbitrary constants into the (k-1)th order polynomial; and

an XOR unit (630) which generates n characteristic information values ($g_1...g_n$) by performing an XOR operation on the n polynomial solutions and the n system information values;

wherein the characteristic information values are stored in a predetermined area in the application device (30) and used to generate the same system key when a portion of the n system information values are changed.

**13.** The apparatus according claim 12, wherein the system key is deleted from the application device (30) after the polynomial generation unit (640) transmits the system key.

**14.** The apparatus according to claim 12 or 13, wherein the system information values include at least one of a serial number of a central processing unit, a media access control address of a network card, a volume label of a hard disk, a memory size, a basic input/output system version, an operating system type, an OS version, an OS manufacture's identifier, and a serial number of a sound card.

**15.** The apparatus according to claim 12, 13 or 14, wherein the n system information values are equalized by using a hash function before performing the XOR operation.

**16.** An apparatus for generating a system key previously shared over a digital rights management system, the apparatus **characterised by**:

a system information database (710) which stores n system information values ($g_1$... $g_n$) corresponding to identification information on components of an application device (30), where n denotes a natural number;
a characteristic information database (760) which stores n characteristic information values ($h_1$... $h_n$) generated by performing an XOR operation on the n system information values and polynomial solutions obtained by inputting arbitrary constants into a (k-1)th order polynomial, where k denotes a natural number smaller than n;
an XOR unit (730) which generates n modified polynomial solutions ($f'_1$...$f'_n$) by performing an XOR operation on the n characteristic information values ($h_1$...$h_n$) and n modified system information values ($g'_1$...$g'_n$) obtained by modifying at least a portion of the n system information values; and
a system key generation unit (770) which generates the system key (S) by using k modified polynomial solutions selected from the n modified polynomial solutions, wherein the system key is arbitrarily selected from coefficients of the (k-1)th order polynomial.

**17.** The apparatus according to claim 16, wherein the system key generation unit (770) determines the system key by inputting coordinate values into the (k-1)th order polynomial, the coordinate values consisting of the arbitrary constants and the modified polynomial solutions corresponding to the arbitrary constants.

**18.** The apparatus according to claim 16 or 17, wherein the system key generation unit (770) comprises:

a selection unit (772) which selects k modified polynomial solutions corresponding to the k arbitrary constants from the n modified polynomial solutions;
a key generation unit (774) which generates a candidate system key by inputting coordinate values into the (k-1)th order polynomial, the coordinate values consisting of the arbitrary constants and the k selected polynomial solutions corresponding to the arbitrary constants; and
a key verification unit (776) which verifies the candidate system key by decrypting an encrypted license received from a license server (20) by using the candidate system key.

**19.** The apparatus according to claim 18, wherein the key verification unit (776) determines the candidate system key as an authentic system key if the decrypting of the encrypted license is successful.

**20.** The apparatus according to claim 18, wherein the key verification unit (776) generates an update signal for allowing the selection unit (772) to select other k modified polynomial solutions different from those selected previously if the decrypting of the encrypted license is not successful.

**21.** The apparatus according to any of claims 16 to 20, wherein the modified system information values include at least one of a serial number of a central processing unit, a media access control address of a network card, a volume label of a hard disk, a memory size, a basic input/output system version, an operating system type, an OS version, an OS manufacture's identifier, and a serial number of a sound card, or a combination of them.

**22.** The apparatus according to any of claims 16 to 21, wherein the modified system information values are equalized by using a hash function before performing the XOR operation.

**23.** A computer readable recording medium storing a program for executing a method of generating a previously shared system key in an application device (30) of a digital rights management system, the method **characterised by**:

generating n modified polynomial solutions ($f'_1...f'_n$) by performing an XOR operation on n modified system information values ($g'_1...g'_n$) and n characteristic information values ($h_1...h_n$), where n denotes a natural number; and

generating the system key (S) by using k modified polynomial solutions selected from the n modified polynomial solutions, where k denotes a natural number smaller than n, wherein the modified system information values are generated by modifying at least a portion of n system information values representing identification information on components of the application device (30),

the characteristic information values are generated by performing an XOR operation on polynomial solutions obtained by inputting arbitrary constants into a (k-1)th order polynomial and the n system information values, and the system key is arbitrarily selected from coefficients of the (k-1)th order polynomial.

24. A computer readable recording medium storing a program for executing a method of sharing a system key between an application device (30) and a license server (20) of a digital rights management system, the method **characterised by**:

defining a (k-1) th order polynomial having k random numbers as coefficients, where k denotes a natural number;

generating n polynomial solutions ($f_1...f_n$) by inputting n constants into the (k-1)th order polynomial, where n denotes a natural number;

generating n characteristic information values ($h_1...h_n$) by performing an XOR operation on the n polynomial solutions and n system information values, the n system information values representing identification information on components of the application device (30); and

selecting one of the coefficients of the (k-1)th order polynomial as a system key (S) and transmitting the system key to the license server (20), wherein the characteristic information values are used to generate a same system key when a portion of the n system information values are changed.

## Patentansprüche

1. Verfahren zum gemeinsamen Nutzen eines Systemschlüssels zwischen einer Anwendungseinrichtung (30) und einem Lizenz-Server (20) eines Systems zur Verwaltung digitaler Rechte (digital rights management system), wobei das Verfahren **gekennzeichnet ist durch**:

Definieren eines Polynoms (k-1)-ter Ordnung mit k Zufallszahlen als Koeffizienten, wobei k eine natürliche Zahl bezeichnet;

Generieren von n Polynom-Lösungen ($f_1...f_n$) **durch** Eingeben von n Konstanten in das Polynom (k-1)-ter Ordnung, wobei n eine natürliche Zahl bezeichnet;

Generieren n charakteristischer Informationswerte ($h_1...h_n$) **durch** Durchführen einer XOR-Operation an den n Polynom-Lösungen und n Systeminformationswerten ($g_1...g_n$), wobei die n Systeminformationswerte Identifizierungsinformationen über Komponenten der Anwendungseinrichtung (30) darstellen; und

Auswählen eines der Koeffizienten des (k-1)-ten Polynoms als einen Systemschlüssel (S) und Senden des Systemschlüssels zu dem Lizenz-Server (20), wobei die charakteristischen Informationswerte verwendet werden, um den gleichen Systemschlüssel zu generieren, wenn ein Teil der n Systeminformationswerte verändert wird.

2. Verfahren nach Anspruch 1, das des Weiteren Löschen der Koeffizienten aus der Anwendungseinrichtung (30) umfasst.

3. Verfahren nach Anspruch 1 oder 2, wobei die n Systeminformationswerte wenigstens eine Seriennummer einer zentralen Verarbeitungseinheit, eine Media-Access-Control-Adresse einer Netzwerkkarte, einen Datenträgerkennsatz (volume label) einer Festplatte, eine Speichergröße, eine BIOS-Version, einen Betriebssystem-Typ, eine Betriebssystem-Version, eine Betriebssystem-Herstellerkennung oder eine Seriennummer einer Soundkarte enthalten.

4. Verfahren nach einem der vorangehenden Ansprüche, wobei die n Systeminformationswerte vor Durchführen der XOR-Operation unter Verwendung einer Hash-Funktion egalisiert werden.

5. Verfahren zum Generieren eines bereits gemeinsam genutzten Systemschlüssels für eine Anwendungseinrichtung (30) eines Systems zur Verwaltung digitaler Rechte, wobei das Verfahren **gekennzeichnet ist durch**:

Generieren n modifizierter Polynom-Lösungen ($f'_1...f'_n$) **durch** Durchführen einer XOR-Operation an n modifizierten Systeminformationswerten ($g'_1...g'_n$) und n charakteristischen Informationswerten ($h_1...h_n$), wobei n eine natürliche Zahl bezeichnet; und

Generieren des Systemschlüssels (S) unter Verwendung k modifizierter Polynom-Lösungen, die aus den n modifizierten Polynom-Lösungen ausgewählt werden, wobei k eine natürliche Zahl kleiner als n bezeichnet und die modifizierten Systeminformationswerte ($g'_1...g'_n$) **durch** Modifizieren wenigstens eines Teils von n Systeminformationswerten generiert werden, die Identifizierungsinformationen über Komponenten der Anwendungseinrichtung (30) darstellen,

die charakteristischen Informationswerte ($h_1...h_n$) **durch** Durchführen einer XOR-Operation an Polynom-Lösungen ($f_1...f_n$), die gewonnen werden, indem beliebige Konstanten in ein Polynom (k-1)-ter Ordnung eingegeben werden, und n Systeminformationswerten generiert werden, und

der Systemschlüssel willkürlich aus Koeffizienten des Polynoms (k-1)-ter Ordnung ausgewählt wird.

6. Verfahren nach Anspruch 5, wobei das Generieren des Systemsschlüssels Bestimmen des Systemschlüssels durch Eingeben von Koordinatenwerten, die aus den beliebigen Konstanten und den modifizierten Polynom-Lösungen bestehen, die den beliebigen Konstanten entsprechen, in das Polynom (k-1)-ter Ordnung einschließt.

7. Verfahren nach Anspruch 5 oder 6, wobei das Generieren des Systemschlüssels einschließt:

Auswählen der k modifizierten Polynom-Lösungen, die den k beliebigen Konstanten entsprechen, aus den n modifizierten Polynom-Lösungen;

Erzeugen eines Kandidaten-Systemschlüssels durch Eingeben der Koordinatenwerte, die aus den beliebigen Konstanten und den k Polynom-Lösungen bestehen, die den beliebigen Konstanten entsprechen; und

Verifizieren des Kandidaten-Systemschlüssels durch Entschlüsseln einer von einem Lizenz-Server (20) empfangenen verschlüsselten Lizenz unter Verwendung des Kandidaten-Systemschlüssels.

8. Verfahren nach Anspruch 7, wobei das Generieren des Systemschlüssels des Weiteren Bestimmen des Kandidaten-Systemschlüssels als einen authentischen Systemschlüssel einschließt, wenn das Entschlüsseln der verschlüsselten Lizenz erfolgreich ist.

9. Verfahren nach Anspruch 7, wobei das Generieren des Systemschlüssels des Weiteren Auswählen anderer k modifizierter Polynom-Lösungen, die sich von den zuvor ausgewählten unterscheiden, wenn das Entschlüsseln der verschlüsselten Lizenz nicht erfolgreich ist, und Wiederholen des Generierens des Kandidaten-Systemschlüssels und der Verifizierung des Kandidaten-Systemschlüssels einschließt.

10. Verfahren nach einem der Ansprüche 5 bis 9, wobei die modifizierten Systeminformationswerte wenigstens eine Seriennummer einer zentralen Verarbeitungseinheit, eine Media-Acess-Control-Adresse einer Netzwerkkarte, einen Datenträgerkennsatz einer Festplatte, eine Speichergröße, eine BIOS-Version, einen Betriebssystem-Typ, eine Betriebssystem-Version, eine Betriebssystem-Herstellerkennung oder eine Seriennummer einer Sound-Karte einschließen.

11. Verfahren nach einem der Ansprüche 5 bis 10, wobei die n modifizierten Systeminformationswerte vor Durchführen der XOR-Operation unter Verwendung einer Hash-Funktion egalisiert werden.

12. Vorrichtung zum gemeinsamen Nutzen eines Systemschlüssels mit einem Lizenz-Server (20) eines Systems zur Verwaltung digitaler Rechte, wobei die Vorrichtung **gekennzeichnet ist durch**:

eine Systeminformations-Datenbank (610), die n Systeminformationswerte ($g_1...g_n$), die Identifizierungsinformationen über Komponenten einer Anwendungseinrichtung (30) entsprechen, speichert, abruft und editiert;

eine Polynom-Generierungseinheit (640), die ein Polynom (k-1)-ter Ordnung **durch** willkürliches Auswählen von Koeffizienten des Polynoms (k-1)-ter Ordnung generiert, einen der ausgewählten Koeffizienten des Polynoms als einen Systemschlüssel bestimmt und den Systemschlüssel zu dem Lizenz-Server (20) sendet;

eine Einheit (650) zum Berechnen von Polynom-Lösungen, die n Polynom-Lösungen ($f_1...f_n$) **durch** Eingeben n beliebiger Konstanten in das Polynom (k-1)-ter Ordnung generiert; und

eine XOR-Einheit (630), die n charakteristische Informationswerte ($g_1...g_n$) **durch** Durchführen einer XOR-Operation an den n Polynom-Lösungen und den n Systeminformationswerten generiert;

wobei die charakteristischen Informationswerte in einem vorgegebenen Bereich in der Anwendungseinrichtung (30) gespeichert werden und verwendet werden, um den gleichen Systemschlüssel zu generieren, wenn ein Teil der n Systeminformationswerte verändert wird.

13. Vorrichtung nach Anspruch 12, wobei der Systemschlüssel aus der Anwendungseinrichtung (30) gelöscht wird, nachdem die Polynom-Generierungseinheit (640) den Systemschlüssel sendet.

14. Vorrichtung nach Anspruch 12 oder 13, wobei die Systeminformationswerte wenigstens eine Seriennummer einer zentralen Verarbeitungseinheit, eine Media-Access-Control-Adresse einer Netzwerkkarte, einen Datenträgerkennsatz einer Festplatte, eine Speichergröße, eine BIOS-Version, einen Betriebssystem-Typ, eine Betriebssystem-Version, eine Betriebssystem-Herstellerkennung oder eine Seriennummer einer Sound-Karte enthalten.

15. Vorrichtung nach Anspruch 12, 13 oder 14, wobei die Systeminformationswerte vor Durchführen der XOR-Operation unter Verwendung einer Hash-Funktion egalisiert werden.

16. Vorrichtung zum Generieren eines bereits über ein System zur Verwaltung digitaler Rechte gemeinsam genutzten Systemschlüssels, wobei die Vorrichtung **gekennzeichnet ist durch**:

   eine Systeminformations-Datenbank (710), die n Systeminformationswerte ($g_1...g_n$) speichert, die Identifizierungsinformationen über Komponenten einer Anwendungseinrichtung (30) entsprechen, wobei n eine natürliche Zahl bezeichnet;
   eine Datenbank (760) charakteristischer Informationen, die n charakteristische Informationswerte ($h_1...h_n$) speichert, die generiert werden, indem eine XOR-Operation an den n Systeminformationswerten und Polynom-Lösungen durchgeführt wird, die ermittelt werden, indem beliebige Konstanten in ein Polynom (k-1)-ter Ordnung eingegeben werden, wobei k eine natürliche Zahl kleiner als n bezeichnet;
   eine XOR-Einheit (730), die n modifizierte Polynom-Lösungen ($f'_1...f'_n$) **durch** Durchführen einer XOR-Operation an den n charakteristischen Informationswerten ($h_1...h_n$) und n modifizierten Systeminformationswerten ($g'_1...g'_n$) generiert, die gewonnen werden, indem wenigstens ein Teil der n Systeminformationswerte modifiziert wird; und
   eine Einheit (770) zum Generieren eines Systemschlüssels, die den Systemschlüssel (S) unter Verwendung k modifizierter Polynom-Lösungen generiert, die aus den n modifizierten Polynom-Lösungen ausgewählt werden, wobei der Systemschlüssel willkürlich aus Koeffizienten des Polynoms (k-1)-ter Ordnung ausgewählt wird.

17. Vorrichtung nach Anspruch 16, wobei die Einheit (770) zum Erzeugen eines Systemschlüssels den Systemschlüssel bestimmt, indem sie Koordinatenwerte in das Polynom (k-1)-ter Ordnung eingibt, wobei die Koordinatenwerte aus den beliebigen Konstanten und den modifizierten Polynom-Lösungen bestehen, die den beliebigen Konstanten entsprechen.

18. Vorrichtung nach Anspruch 16 oder 17, wobei die Einheit (770) zum Erzeugen des Systemschlüssels umfasst:

   eine Auswähleinheit (772), die k modifizierte Polynom-Lösungen, die den k beliebigen Konstanten entsprechen, aus den n modifizierten Polynom-Lösungen auswählt;
   eine Schlüssel-Erzeugungseinheit (774), die einen Kandidaten-Systemschlüssel erzeugt, indem sie Koordinatenwerte in das Polynom (k-1)-ter Ordnung eingibt, wobei die Koordinatenwerte aus den beliebigen Konstanten und den k ausgewählten Polynom-Lösungen bestehen, die den beliebigen Konstanten entsprechen; und
   eine Schlüssel-Verifizierungseinheit (776, die den Kandidaten-Systemschlüssel verifiziert, indem sie eine von einem Lizenz-Server (20) empfangene verschlüsselte Lizenz unter Verwendung des Kandidaten-Systemschlüssels entschlüsselt.

19. Vorrichtung nach Anspruch 18, wobei die Schlüssel-Verifizierungseinheit (776) den Kandidaten-Systemschlüssel als einen authentischen Systemschlüssel bestimmt, wenn die Entschlüsselung der verschlüsselten Lizenz erfolgreich ist.

20. Vorrichtung nach Anspruch 18, wobei die Schlüssel-Verifizierungseinheit (776) ein Aktualisierungssignal erzeugt, das es der Auswähleinheit (772) gestattet, andere k modifizierte Polynom-Lösungen auszuwählen, die sich von den zuvor ausgewählten unterscheiden, wenn das Entschlüsseln der verschlüsselten Lizenz nicht erfolgreich ist.

21. Vorrichtung nach einem der Ansprüche 16 bis 20, wobei die modifizierten Systeminformationswerte wenigstens eine Seriennummer einer zentralen Verarbeitungseinheit, eine Media-Access-Control-Adresse einer Netzwerkkarte, einen Datenträgerkennsatz einer Festplatte, eine Speichergröße, eine BIOS-Version, einen Betriebssystem-Typ, eine Betriebssystem-Version, eine Betriebssystem-Herstellerkennung oder eine Seriennummer einer Sound-Karte oder eine Kombination daraus enthalten.

**22.** Vorrichtung nach einem der Ansprüche 16 bis 21, wobei die modifizierten Systeminformationswerte vor Durchführen der XOR-Operation unter Verwendung einer Hash-Funktion egalisiert werden.

**23.** Computerlesbaren Aufzeichnungsmedium, das ein Programm zum Ausführen eines Verfahrens zum Generieren eines bereits gemeinsam genutzten Systemschlüssels in einer Anwendungseinrichtung (30) eines Systems zur Verwaltung digitaler Rechte speichert, wobei das Verfahren **gekennzeichnet ist durch**:

Generieren n modifizierter Polynom-Lösungen ($f'_1...f'_n$) **durch** Durchführen einer XOR-Operation an n modifizierten Systeminformationswerten ($g'_1...g'_n$) und n charakteristischen Informationswerten ($h_1...h_n$), wobei n eine natürliche Zahl bezeichnet; und

Generieren des Systemschlüssels (S) unter Verwendung k modifizierter Polynom-Lösungen, die aus den n modifizierten Polynom-Lösungen ausgewählt werden, wobei k eine natürliche Zahl kleiner als n bezeichnet und die modifizierten Systeminformationswerte **durch** Modifizieren wenigstens eines Teils von n Systeminformationswerten generiert werden, die Identifizierungsinformation über Komponenten der Anwendungseinrichtung (30) darstellen,

die charakteristischen Informationswerte **durch** Durchführen einer XOR-Operation an Polynom-Lösungen, die gewonnen werden, indem beliebige Konstanten in ein Polynom (k-1)-ter Ordnung eingegeben werden, und den n Systeminformationswerten generiert werden, und

der Systemschlüssel willkürlich aus Koeffizienten des Polynoms (k-1)-ter Ordnung ausgewählt wird.

**24.** Computerlesbares Aufzeichnungsmedium, das ein Programm zum Ausführen eines Verfahrens zum gemeinsamen Nutzen eines Systemschlüssels zwischen einer Anwendungseinrichtung (30) und einem Lizenz-Server (20) eines Systems zum Verwalten digitaler Rechte speichert, wobei das Verfahren **gekennzeichnet ist durch**:

Definieren eines Polynoms (k-1)-ter Ordnung mit k Zufallszahlen als Koeffizienten, wobei k eine natürliche Zahl bezeichnet;

Erzeugen von n Polynom-Lösungen ($f_1...f_n$) **durch** Eingeben von n Konstanten in das Polynom (k-1)-ter Ordnung, wobei n eine natürliche Zahl bezeichnet;

Generieren n charakteristischer Informationswerte ($h_1...h_n$) **durch** Durchführen einer XOR-Operation an den n Polynom-Lösungen und n Systeminformationswerten, wobei die n Systeminformationswerte Identifizierungsinformation über Komponenten der Anwendungseinrichtung (30) darstellen; und

Auswählen eines der Koeffizienten des Polynoms (k-1)-ter Ordnung als einen Systemschlüssel (S) und Senden des Systemschlüssels zu dem Lizenz-Server (20), wobei die charakteristischen Informationswerte verwendet werden, um einen gleichen Systemschlüssel zu generieren, wenn ein Teil n Systeminformationswerte verändert wird.

**Revendications**

**1.** Procédé de partage d'une clé système entre un dispositif d'application (30) et un serveur sous licence (20) d'un système de gestion de droits numériques, le procédé étant **caractérisé par** les étapes consistant à :

définir un (k-1)ième ordre polynomial ayant k nombres aléatoires en tant que coefficients, où k désigne un nombre naturel,

générer n solutions polynomiales (f1 ... fn) en entrant n constantes dans le (k-1)ième ordre polynomial, où n désigne un nombre naturel,

générer n valeurs d'informations de caractéristiques (h1 ... hn) en exécutant une opération OU-EXCLUSIF sur les n solutions polynomiales et n valeurs d'informations système (g1 ... gn), les n valeurs d'informations système représentant des informations d'identification sur des composants du dispositif d'application (30), et

sélectionner l'un des coefficients du (k-1)ième ordre polynomial en tant que clé système (S) et transmettre la clé système au serveur sous licence (20), les valeurs d'informations de caractéristiques étant utilisées pour générer la même clé système lorsqu'une partie des n valeurs d'informations système est changée.

**2.** Procédé selon la revendication 1, comportant en outre la suppression des coefficients du dispositif d'application (30).

**3.** Procédé selon la revendication 1 ou 2, dans lequel les n valeurs d'informations système incluent au moins l'un parmi un numéro de série d'une unité centrale de traitement, une adresse de commande d'accès au support d'une carte réseau, une étiquette de volume d'un disque dur, une taille de mémoire, une version de système de base d'entrée/sortie, un type de système d'exploitation, une version OS, un identifiant de fabricant OS, et un numéro de série d'une carte son.

**4.** Procédé selon l'une quelconque des revendications précédentes, dans lequel les n valeurs d'informations système sont égalisées en utilisant une fonction de hachage avant d'exécuter l'opération OU-EXCLUSIF.

**5.** Procédé de génération d'une clé système précédemment partagée pour un dispositif d'application (30) d'un système de gestion des droits numériques, le système étant **caractérisé par** les étapes consistant à :

générer n solutions polynomiales modifiées (f'1 ... f'n) en exécutant une opération OU-EXCLUSIF sur n valeurs d'informations système modifiées (g'1 ... g'n) et n valeurs d'informations de caractéristiques (h1 ... hn), où n désigne un nombre naturel, et
générer la clé système (S) en utilisant k solutions polynomiales modifiées sélectionnées à partir des n solutions polynomiales modifiées, où k désigne un nombre naturel inférieur à n, les valeurs d'informations système modifiées (g'1 ... g'n) étant générées en modifiant au moins une partie des n valeurs d'informations système représentant des informations d'identification sur des composants du dispositif d'application (30),
les valeurs d'informations de caractéristiques (h1 ... hn) sont générées en exécutant une opération OU-EXCLUSIF sur des solutions polynomiales (f1 ... fn) obtenues en entrant des constantes arbitraires dans un (k-1) ième ordre polynomial et les n valeurs d'informations système, et
la clé système est sélectionnée de manière arbitraire à partir des coefficients du (k-1)ième ordre polynomial.

**6.** Procédé selon la revendication 5, dans lequel la génération de la clé système inclut de déterminer la clé système en entrant des valeurs de coordonnées, constituées des constantes arbitraires et les solutions polynomiales modifiées correspondant aux constantes arbitraires dans le (k-1)ième ordre polynomial.

**7.** Procédé selon la revendication 5 ou 6, dans lequel la génération de la clé système inclut les étapes consistant à :

sélectionner les k solutions polynomiales modifiées correspondant aux k constantes arbitraires à partir des n solutions polynomiales modifiées,
générer une clé système candidate en entrant les valeurs de coordonnées, constituées des constantes arbitraires et des k solutions polynomiales correspondant à la constante arbitraire, et
vérifier la clé système candidate en décryptant une licence cryptée reçue en provenance d'un serveur sous licence (20) en utilisant la clé système candidate.

**8.** Procédé selon la revendication 7, dans lequel la génération de la clé système inclut en outre la détermination de la clé système candidate en tant que clé système authentique si le décryptage de la licence cryptée est réussi.

**9.** Procédé selon la revendication 7, dans lequel la génération de la clé système inclut en outre la sélection d'autres k solutions polynomiales modifiées différentes de celles sélectionnées précédemment si le décryptage de la licence cryptée n'est pas réussi et répéter la génération de la clé système candidate et la vérification de la clé système candidate.

**10.** Procédé selon l'une quelconque des revendications 5 à 9, dans lequel les valeurs d'informations système modifiées incluent au moins l'un parmi un numéro de série d'une unité centrale de traitement, une adresse de commande d'accès à un support d'une carte réseau, une étiquette de volume d'un disque dur, une taille de mémoire, une version de système de base d'entrée/sortie, un type de système d'exploitation, une version OS, un identifiant de fabricant OS, et un numéro de série d'une carte son.

**11.** Procédé selon l'une quelconque des revendications 5 à 10, dans lequel les n valeurs d'informations système modifiées sont égalisées en utilisant une fonction de hachage avant d'exécuter l'opération OU-EXCLUSIF.

**12.** Dispositif pour partager une clé système avec un serveur sous licence (20) d'un système de gestion des droits numériques, le dispositif étant **caractérisé par** :

une base de données d'informations système (610) qui mémorise, récupère, et modifie n valeurs d'informations système (g1 ... gn) correspondant aux informations d'identification sur des composants d'un dispositif d'application (30),

une unité de génération polynomiale (640) qui génère un (k-1)ième ordre polynomial en sélectionnant de manière arbitraire des coefficients du (k-1)ième ordre polynomial, détermine l'un des coefficients sélectionnés de l'ordre polynomial en tant que clé système, et transmet la clé système au serveur sous licence (20),

une unité de calcul de solution polynomiale (650) qui génère n solutions polynomiales (f1 ... fn) en entrant n constantes arbitraires dans le (k-1)ième ordre polynomial, et

une unité OU-EXCLUSIF (630) qui génère n valeurs d'informations de caractéristiques (g1 ... gn) en exécutant une opération OU-EXCLUSIF sur les n solutions polynomiales et les n valeurs d'informations système,

les valeurs d'informations de caractéristiques étant mémorisées dans une zone prédéterminée dans le dispositif d'application (30) et utilisées pour générer la même clé système lorsqu'une partie des n valeurs d'informations système est changée.

**13.** Dispositif selon la revendication 12, dans lequel la clé système est supprimée du dispositif d'application (30) une fois que l'unité de génération polynomiale (640) a transmis la clé système.

**14.** Dispositif selon la revendication 12 ou 13, dans lequel les valeurs d'informations système incluent au moins l'un parmi un numéro de série d'une unité centrale de traitement, une adresse de commande d'accès à un support d'une carte réseau, une étiquette de volume d'un disque dur, une taille de mémoire, une version de système de base d'entrée/sortie, un type de système d'exploitation, une version OS, un identifiant de fabricant OS, et un numéro de série d'une carte son.

**15.** Dispositif selon la revendication 12, 13 ou 14, dans lequel les n valeurs d'informations système sont égalisées en utilisant une fonction de hachage avant d'exécuter l'opération OU-EXCLUSIF.

**16.** Dispositifs pour générer une clé système précédemment partagée sur un système de gestion des droits numériques, le dispositif étant **caractérisé par** :

une base de données d'informations système (710) qui mémorise n d'informations système (g1 ... gn) correspondant à des informations d'identification sur des composants d'un dispositif d'application (30) où n désigne un nombre naturel,

une base de données d'informations de caractéristiques (760) qui mémorise n valeurs d'informations de caractéristiques (h1 ... hn) générées en effectuant une opération OU-EXCLUSIF sur les n valeurs d'informations système et des solutions polynomiales obtenues en entrant des constantes arbitraires dans un (k-1)ième ordre polynomial, où k désigne un nombre naturel inférieur à n,

une unité OU-EXCLUSIF (730) qui génère n solutions polynomiales modifiées (f'1 ... f'n) en exécutant une opération OU-EXCLUSIF sur les n valeurs d'informations de caractéristiques (h1 ... hn) et les n valeurs d'informations système modifiées (g'1 ... g'n) obtenues en modifiant au moins une partie des n valeurs d'informations système, et

une unité de génération de clé système (770) qui génère la clé système (S) en utilisant k solutions polynomiales modifiées sélectionnées à partir des n solutions polynomiales modifiées, la clé système étant arbitrairement sélectionnée à partir des coefficients du (k-1)ième ordre polynomial.

**17.** Dispositif selon la revendication 16, dans lequel l'unité de génération de clé système (770) détermine la clé système en entrant des valeurs de coordonnées dans le (k-1)ième ordre polynomial, les valeurs de coordonnées étant constituées des constantes arbitraires et les solutions polynomiales modifiées correspondant aux constantes arbitraires.

**18.** Dispositif selon la revendication 16 ou 17, dans lequel l'unité de génération de clé système (770) comporte :

une unité de sélection (772) qui sélectionne k solutions polynomiales modifiées correspondant aux k constantes arbitraires à partir des n solutions polynomiales modifiées,

une unité de génération de clé (774) qui génère une clé système candidate en entrant des valeurs de coordonnées dans le (k-1)ième ordre polynomial, les valeurs de coordonnées étant constituées des constantes arbitraires et les k solutions polynomiales sélectionnées correspondant aux constantes arbitraires, et

une unité de vérification de clé (776) qui vérifie la clé système candidate en décryptant une licence cryptée reçue en provenance d'un serveur sous licence (20) en utilisant la clé système candidate.

**19.** Dispositif selon la revendication 18, dans lequel l'unité de vérification de clé (776) détermine la clé système candidate en tant que clé système authentique si le décryptage de la licence cryptée est réussi.

**20.** Dispositif selon la revendication 18, dans lequel l'unité de vérification de clé (776) génère un signal de mise à jour pour permettre à l'unité de sélection (772) de sélectionner d'autres k solutions polynomiales modifiées différentes de celles sélectionnées précédemment si le décryptage de la licence cryptée n'est pas réussi.

**21.** Dispositif selon l'une quelconque des revendications 16 à 20, dans lequel les valeurs d'informations système modifiées incluent au moins l'un parmi un numéro de série d'une unité centrale de traitement, une adresse de commande d'accès à un support d'une carte réseau, une étiquette de volume d'un disque dur, une taille de mémoire, une version de système de base d'entrée/sortie, un type de système d'exploitation, une version OS, un identifiant de fabricant OS, et un numéro de série d'une carte son, ou une combinaison de ceux-ci.

**22.** Dispositif selon l'une quelconque des revendications 16 à 21, dans lequel les valeurs d'informations système modifiées sont égalisées en utilisant une fonction de hachage avant d'exécuter l'opération OU-EXCLUSIF.

**23.** Support d'enregistrement lisible par ordinateur mémorisant un programme pour exécuter un procédé de génération d'une clé système précédemment partagée dans un dispositif d'application (30) d'un système de gestion des droits numériques, le procédé étant **caractérisé par** les étapes consistant à :

générer n solutions polynomiales modifiées (f'1 ... f'n) en exécutant une opération OU-EXCLUSIF sur n valeurs d'informations système modifiées (g'1 ... g'n) et n valeurs d'informations de caractéristiques (h1 ... hn), où n désigne un nombre naturel, et
générer la clé système (S) en utilisant k solutions polynomiales modifiées sélectionnées à partir des n solutions polynomiales modifiées, où k désigne un nombre naturel inférieur à n, les valeurs d'informations système modifiées étant générées en modifiant au moins une partie des n valeurs d'informations système représentant des informations d'identification sur des composants du dispositif d'application (30),
les valeurs d'informations de caractéristiques sont générées en exécutant une opération OU-EXCLUSIF sur des solutions polynomiales obtenues en entrant des constantes arbitraires dans un (k-1) ième ordre polynomial et des n valeurs d'informations système, et
la clé système est sélectionnée de manière arbitraire à partir des coefficients du (k-1)ième ordre polynomial.

**24.** Support d'enregistrement lisible par ordinateur mémorisant un programme pour exécuter un procédé de partage d'une clé système entre un dispositif d'application (30) et un serveur sous licence (20) d'un système de gestion des droits numériques, le procédé étant **caractérisé par** les étapes consistant à :

définir un (k-1)ième ordre polynomial ayant k nombres aléatoires en tant que coefficients, où k désigne un nombre naturel,
générer n solutions polynomiales (f1 ... fn) en entrant n constantes dans le (k-1)ième ordre polynomial, où n désigne un nombre naturel,
générer n valeurs d'informations de caractéristiques (h1 ... hn) en exécutant une opération OU-EXCLUSIF sur les n solutions polynomiales et n valeurs d'informations système, les n valeurs d'informations système représentant des informations d'identification sur des composants du dispositif d'application (30), et
sélectionner l'un des coefficients du (k-1)ième ordre polynomial en tant que clé système (S) et transmettre la clé système au serveur sous licence (20), les valeurs d'informations de caractéristiques étant utilisées pour générer la même clé système lorsqu'une partie des n valeurs d'informations système est changée.

# FIG. 1

| | |
|---|---|
| CONTENT SERVER ⌐10 | LICENSE SERVER ⌐20 |

E(K_cont, Cont)

AUTHENTICATION

E(S, Lic)

APPL DEVICE —30

# FIG. 2

E(S, Lic)

S

Lic

K_cont

E(K_cont, Cont)

Cont

FIG. 3

# FIG. 4

START

| COLLECT SYSTEM INFO | — 410 |

| DEFINE (k-1)TH ORDER POLYNOMIAL | — 420 |

| GENERATE n POLYNOMIAL SOLUTIONS | — 430 |

| GENERATE AND STORE n CHARATERISTIC INFO | — 440 |

| DETERMINE ARBITRARY COEFFICIENT AS SYSTEM KEY | — 450 |

END

# FIG. 5

```
                    ┌─────────┐
                    │  START  │
                    └────┬────┘
                         │
          ┌──────────────▼──────────────┐
          │ GENERATE n MODIFIED POLYNOMIAL│──── 510
          │          SOLUTIONS           │
          └──────────────┬──────────────┘
                         │
          ┌──────────────▼──────────────┐
          │ SELECT·k MODIFIED POLYNOMIAL │──── 520
          │          SOLUTIONS           │
          └──────────────┬──────────────┘
                         │
          ┌──────────────▼──────────────┐
          │ GENERATE CANDIDATE SYSTEM KEY│──── 530
          └──────────────┬──────────────┘
                         │          540
                        ╱ ╲
                       ╱   ╲
               ╱ DECRYPTION USING ╲      NO
              ╱ CANDIDATE SYSTEM KEY IS ╲──────── 560
              ╲     SUCCESSFUL?      ╱
                       ╲   ╱
                        ╲ ╱
                         │ YES
          ┌──────────────▼──────────────┐
          │ DETERMINE CANDIDATE SYSTEM KEY│──── 550
          │      AS SHARED SYSTEM KEY     │
          └──────────────┬──────────────┘
                         │
                    ┌────▼────┐
                    │   END   │
                    └─────────┘
```

# FIG. 6

644

610
SYSTEM INFO DATABASE

640
POLYNOMIAL GENERATION UNIT

612

620
HASH UNIT

642

650
POLYNOMIAL SOLUTION CALCULATION UNIT

622    630    652

XOR

632

660
CHARACTERISTIC INFO DATABASE

# FIG. 7

# FIG. 8

$g_1, g_2, \dots, g_n$

$f_1, f_2, \dots, f_n$

$\otimes$

$h_1, h_2, \dots, h_n$

$g'_1, g'_2, \dots, g'_n$

$h_1, h_2, \dots, h_n$

$\otimes$

$f'_1, f'_2, \dots, f'_n$

FIND $f'_1$ $(f'_1, f'_2, \dots, f'_n)$
CORRESPONDING WITH $f_1 (f_1, f_2, \dots, f_n)$

k COORDINATE VALUES ( i, $f'_i$ )

$f(x) = s + a_1 x + a_2 x^2 + \dots + a_{k-1} x^{k-1}$

S

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9842098 A